# EUROPÄISCHE PATENTSCHRIFT

(11) **EP 1 436 220 B1**
(45) Veröffentlichungstag und Bekanntmachung des Hinweises auf die Patenterteilung: **19.04.2006**
(21) Anmeldenummer: 01971994.7
(22) Anmeldetag: 03.09.2001
(51) Int. Cl.: B65H 19/10, C09J 7/02, C09J 133/08

(54) **KLEBEBAND FÜR DAS ENDLOSKLEBEN AM KALANDER**
ADHESIVE STRIP FOR CONTINUOUS ADHESION ON A CALENDER
BANDE ADHESIVE POUR ADHERENCE CONTINUE SUR UNE CALANDRE

(43) Veröffentlichungstag der Anmeldung: 14.07.2004
(73) Patentinhaber: tesa AG, 20253 Hamburg (DE)
(72) Erfinder: EIKMEIER, Markus, 22297 Hamburg (DE); GEBBEKEN, Bernhard, 21075 Hamburg (DE); NAGEL, Christoph, 22529 Hamburg (DE); WILCK, Christine, 20253 Hamburg (DE)
(86) Internationale Anmeldenummer: PCT/EP2001/010129
(87) Internationale Veröffentlichungsnummer: WO 2003/020623

(56) Entgegenhaltungen:
- EP-A- 0 576 128
- EP-A- 1 022 245
- WO-A-91/08159
- US-A- 4 413 080
- US-A- 5 641 567

## Beschreibung

Die Erfindung betrifft ein Klebeband für den fliegenden Rollenwechsel von auf Rollen aufgewickeltem Flachbahnmaterial, ausgerüstet mit einem Hauptträger, einer Selbstklebemasse auf der Vorderseite und zumindest einem klebenden spaltbaren System auf der Rückseite sowie deren Verwendung.

Der fliegende Rollenwechsel ist in Papierfabriken oder dergleichen ein gängiges Verfahren, um eine alte, fast abgespulte Papierrolle durch eine neue zu ersetzen, ohne die schnell laufenden Maschinen anhalten zu müssen. Das Ende der alten Papierbahn wird dabei mit dem Anfang der neuen Papierbahn verklebt, um einen möglichst kontinuierlichen Betrieb zu gewährleisten. Hierfür werden doppelseitig klebende Selbstklebebänder, sogenannte Fixe, eingesetzt, die einerseits hochklebrig und -tackig sind, andererseits aber aufgrund ihrer wasserlöslichen Selbstklebemassen und Papierträger beim Wiedereinsatz der Papierabfälle in der Papiermaschine nicht stören. Klassisch werden die Fixe in Handarbeit am Bahnanfang verklebt, dieser Prozeß erfordert den Einsatz von Fachpersonal und führt zu technisch nicht vorteilhaften Ergebnissen, da die Verklebungen durch die Abfolge von Papierbahnen, Festhalteetiketten und Klebestreifen relativ dick sind.
Für die Verklebung beim fliegenden Rollenwechsel sind diverse Produkte erhältlich, insbesondere solche, welche neben einem Papierträger eine wasserlösliche Selbstklebemasse beidseits beschichtet aufweisen.

Verfahren zum Vorbereiten und zur Durchführung des Rollenwechsels und entsprechende Klebebänder werden beispielsweise in den Schriften EP 418 527 A2, DE 40 33 900 A1, DE 196 28 317 A1 und 198 30 673 vorgestellt.

Das nichtklebende Abdecken von sonst offen liegenden klebenden Bereichen offenbart DE 196 32 689 A2, ein Klebeband für dynamische Belastung beim Spliceverfahren, dessen Papierträger spaltet und mit seinen Resten die Klebemassen abdeckt.

Von dieser Art ist auch ein Klebeband gemäß DE 199 02 179 A1, ebenfalls für ein Spliceverfahren. Dieses Klebeband trägt an seiner nichtklebenden Rückseite ein doppelseitig klebendes Klebeband, das einen spaltfreudigen Papierträger aufweist, der beim Spliceverfahren spaltet und die jeweiligen Kleber abdeckt.

Zur Vermeidung von Reißern beim fliegenden Rollenwechsel ist das aufkaschierte Klebeband mit einem Papierträger aus Spaltpapier eingerückt angeordnet, nämlich in einem gewissen Abstand (V) von der Längskante des Klebebandes. Eine weitere Variante ist in DE 198 30 674 beschrieben. Hier ist ein Klebeband mit zwei Spaltstreifen beschrieben. Weitere Klebebänder und entsprechende Verfahren sind in den Druckschriften US 4413080, US 5641567 EP 1022245 und WO 91/08159 offenbart.

Für den Betrieb von Papierbahnen in Kalandern sind diese Klebebänder oder Spliceverfahren in der Praxis nicht oder nur schlecht geeignet. Klebebänder für den fliegenden Rollenwechsel zeichnen sich durch Klebemassen mit hohem Tack und hoher Anfaßklebrigkeit aus. Bei der Verwendung in Kalandern, insbesondere dann, wenn der Splice durch die geschlossenen Andruckwalzen gefahren wird, ist der Einfluß der Temperatur, der hohen Bahnspannung und des Drucks schädlich für den Splice oder auch für den Kalander.
Durch die hohen Temperaturen kommt es zu einer besonderen thermischen Belastung des Klebebandes. Zum einen kann sich die Verklebung durch die anliegende Bahnspannung lösen. Zum anderen kann es durch die hohen Temperaturen und die hohen Drücke zum seitlichen Ausquetschen der Klebemasse kommen, oder die Klebemasse wird durch das verklebte Papier gepreßt. Diese Klebmasserückstände können zu einer Verklebung der Papierbahnen untereinander oder zu Verklebungen an den Kalanderwalzen führen. Das Ergebnis sind Bahnabrisse oder Beschädigungen der Walzen; es kommt zu Unterbrechungen in dem Bahnverarbeitungsprozeß. Die Walzen müssen dann in einem aufwendigen und teuren Verfahren neu beschichtet werden; weiterhin besteht die Gefahr, daß durch Klebmasserückstände oder Klebebandreste auf den Walzen, die nicht sofort erkannt werden, ein hoher Anteil an Papierverlusten resultiert.

Aufgabe der Erfindung war es, einen Klebstreifen zur Verfügung zu stellen, der für den fliegenden Rollenwechsel bei einer Verarbeitung im Kalander eingesetzt werden kann, ohne die Nachteile des Standes der Technik aufzuweisen.

Gelöst wird die Aufgabe durch die Verwendung einer Klebemasse, wie sie in Anspruch 1 dargelegt ist. Weiterhin beansprucht werden entsprechende Klebebänder sowie ihre vorteilhaften Ausführungsformen sowie ein Spliceverfahren in Zusammenhang mit dem fliegenden Rollenwechsel.

Anspruch 1 betrifft entsprechend die Verwendung einer Selbstklebemasse mit einer Scherfestigkeit von mindestens 1000 Minuten auf Streichrohpapier und mindestens 2000 Minuten auf Tiefdruckpapier, gemessen jeweils bei 23 °C und 55 % rel. Luftfeuchte und bei 1 kg Belastung, für ein Klebeband für den fliegenden Rollenwechsel.

Demgemäß weiterhin beansprucht wird ein Klebeband für den fliegenden Rollenwechsel, ausgerüstet mit einem Hauptträger, einer Selbstklebemasse auf der Vorderseite und zumindest einem klebenden spaltbaren System auf der Rückseite, wobei die Selbstklebemasse eine Scherfestigkeit von mindestens 1000 Minuten auf Streichrohpapier und mindestens 2000 Minuten auf Tiefdruckpapier aufweist, gemessen jeweils bei 23 °C und 55 % rel. Luftfeuchte und bei 1 kg Belastung.

In einer sehr bevorzugten Ausführungsform der Erfindung wird als Selbstklebemasse eine Acrylathaftklebemasse eingesetzt. Es können vorteilhaft sowohl wasserlösliche als auch wasserunlösliche Acrylate eingesetzt werden.
Weiterhin lassen sich auch Natur- und Synthesekautschukmassen als auch Dispersionen der vorstehend beschriebenen Verbindungen einsetzen. Es sei darauf verwiesen, daß prinzipiell alle Basistypen von Haftklebemassen, welche die erfinderischen Kriterien erfüllen, eingesetzt werden können.

Die Messung der Scherfestigkeit erfolgt dabei wie folgt:
Zur Messung der Scherfestigkeit von Klebmassen werden diese auf einen Standardträger (Polyesterfolie; Dicke: 25 µm) beschichtet. Vorteilhafterweise wird ein immer gleicher Masseauftrag von 25 g/m² gewählt.
Nach dem Trocknen und einer eventuellen Vernetzung der Klebmasse wird ein Streifen von 13 mm Breite und mindestens 20 mm Länge herausgeschnitten und auf ein definiertes Papier (z. B. Tiefdruckpapier, z. B. Neopress T 54, 54 g/m2, oder Streichrohpapier, z. B. Mediaprint, 135 g/m²) verklebt. Die Verklebungsfläche beträgt 13 mm x 20 mm. Um einen konstanten Andruck beim Verkleben zu gewährleisten, wird der Prüfling mit einer Rolle (Gewicht: 2 kg) zweimal langsam überrollt. Das so hergestellte Prüfmuster wird mit einem Gewicht von 1 kg parallel zur Verklebungsebene belastet und die Zeit gemessen, die der Klebestreifen auf dem Papier verbleibt.
Für eine bessere Differenzierung der einzelnen Klebmassen wird der Test entsprechend bei weiteren Prüftemperaturen (z.B. 40 °C und 70 °C) durchgeführt.
Um eine fehlerfreie Funktion zu gewährleisten, muß die Klebmasse ein Gewicht von 1 kg mehr als 1000 Minuten auf Streichrohpapier und mehr als 2000 Minuten auf Tiefdruckpapier bei 23 °C und 55 % rel. Luftfeuchte halten.

Als Selbstklebemasse werden erfindungsgemäß Acrylatselbstklebemassen der folgenden Zusammensetzung eingesetzt:
40 bis 90 Gew.-% Acrylsäure, 60 bis 10 % Butylacrylat, oder
40 bis 90 Gew.-% Acrylsäure, 30 bis 5 Gew.-% Butylacrylat, 30 bis 5 Gew.-% Ethylhexylacrylat
Weichmacherzusatz: ethoxylierte Alkylamine, vorzugsweise C16 bis C18, weiter vorzugsweise mit 15 bis 25 Ethoxy-Einheiten.
Die Abmischung Weichmacher mit Polymer beträgt zwischen 55 bis 75 Gew.-% Weichmacher und 25 bis 45 Gew.-% Polymer.
Die Polymerisation erfolgt radikalisch in polaren Lösungsmitteln mit Ethanol als Regler. Es erfolgt eine Teilvernetzung mit Aluminiumchelat (0,3 bis 1,2 Gew.-%, bezogen auf die Gesamtmenge).

Bevorzugt wird die Selbstklebernasse mit einem Masseauftrag von 30 bis 60 g/m² aufgetragen, sehr bevorzugt wird ein Masseauftrag zwischen 35 und 50 g/m² gewählt.

Das erfinderische Klebeband ist hervorragend für den Einsatz in Prozessen geeignet, bei denen das Flachbandmaterial einen oder mehrere Kalander durchläuft.

Das spaltfähige System hat vorteilhaft einen deutlich geringeren Spaltwiderstand als ein Papierträger, der Zugkräfte aufnehmen muß. Das oder die spaltbaren Systeme basieren bevorzugt auf geleimtem hochverdichtetem Papier, auf einem Verbund aus Papier und Folie oder auf einem Verbund aus zwei Folien, wobei der Verbund aus definiert punkt- und/oder linienförmig verbundenen Papieren und/oder Folien bestehen kann. Hierfür kommen beispielsweise insbesondere folgende Papiere, Papierverbundsysteme oder Folien in Frage:
- leicht spaltbare Papiersysteme
- Duplexpapiere
   (definiert zusammenlaminierte Papiere, der Spaltvorgang verläuft extrem homogen; es entstehen keine Spannungsspitzen, z. B. durch inhomogene Verdichtung. Diese Papiere werden zur Herstellung von Tapeten und Filtern eingesetzt.)
- Definiert zusammengeleimte hochverdichtete Papiere (Papiere mit einer hohen Spaltfestigkeit).
   Die Leimung kann beispielsweise mit Stärke, stärkehaltigen Derivaten, Tapetenkleister auf Basis von Methylcellulose (tesa® Kleister , tesa AG, Hamburg; Methylan®, Henkel KgaA, Düsseldorf) oder auch auf Basis von Polyvinylalkoholderivaten erfolgen. Beschrieben werden solche Systeme beispielsweise in der EP 0 757 657 A1.
- Spaltfähige Systeme, bei welchen die Spaltkräfte über die Größe der Verklebungspunkte bestimmt werden; solche Systeme werden beispielsweise in der DE 198 41 609 A1 beschrieben.
- Koextrudierte Folien.

Das oder die spaltbaren Systeme haben vorteilhaft die gleiche Breite wie der Hauptträger. In einer weiteren günstigen Ausführungsform hingegen ist es von Vorteil, wenn der Hauptträger breiter als die spaltbaren Systeme ist. Außerdem ist es vorteilhaft, wenn der Hauptträger die spaltbarenen Systeme im Bereich der Vorderkante (Längskante 14) bis zu 15 mm, insbesondere 0,5 bis 15 mm, bevorzugt 1 bis 7 mm, sehr bevorzugt 1,5 bis 3,5 mm überragt.

Werden mehrere spaltbare Systeme auf das Klebeband aufgebracht, so beträgt der Abstand der spaltbaren Systeme zueinander vorteilhaft 3 bis 50 mm. Bevorzugt werden Abstände von 25 bis 45 mm, ganz besonders Abstände von 30 bis 40 mm gewählt.

Bevorzugt wird ein reißfester Papier- oder Folienträger als Hauptträger eingesetzt. Als Trägermaterialien seien hier beispielsweise angeführt: schwach gekreppte Papiere, maschinenglatte Rohpapiere, einseitig gestrichene glatte Rohpapiere, beidseitig gestrichene, verdichtete, bedruckbare Decorepapiere, einseitig doppel gestrichene, holzfreie, hochglänzende Kraftpapiere, ohne sich durch diese Beispiele in der Wahl der Trägermaterialien unnötig einschränken zu wollen.

Bei mehreren spaltfähigen Systemen auf dem Klebeband können diese aus dem gleichen Material bestehen und somit gleiche Spaltkräfte aufweisen, es kann aber auch von Vorteil sein, die spaltfähigen Systeme aus unterschiedlichem Material vorzusehen, so daß diese unterschiedliche Spaltkräfte besitzen.

In einer weiteren bevorzugten Ausführungsform ist die Selbstklebemasse mit einer Abdeckung versehen, die gegebenenfalls mit einer Perforation oder einem Schlitz in Längsrichtung versehen ist.

Es ist besonders vorteilhaft, wenn die Spaltfestigkeit des Spaltsystems 5 bis 70 cN/cm, insbesondere 12 bis 60 cN/cm beträgt. Zur Messung der Spaltfestigkeit wird verwiesen auf die DE 199 02 179 A1.

Bei dem Spliceverfahren wird ein Klebeband in einer geraden Linie unter die oberste Bahn auf eine neue Papierrolle verklebt, so daß ein Teil des Klebebandes frei bleibt, während die Unterseite des Klebebandes mit der darunter liegenden Bahn verklebt und damit die oberste Bahn sichert, wobei gegebenenfalls zunächst nur ein Teil der gegebenenfalls auf der Selbstklebemasse befindlichen Abdeckung abgezogen wurde, so daß der zum Spliceverfahren benötigte Teil der Selbstklebemasse noch mit der Abdeckung abgedeckt ist und die Rolle in diesem Zustand keine freie klebende Fläche aufweist, worauf zur abschließenden Vorbereitung des Spliceverfahrens die gegebenenfalls noch vorhandene restliche Abdeckung entfernt wird, worauf die so ausgerüstete neue Rolle neben eine fast gänzlich abgespulte, zu ersetzende alte Rolle plaziert wird und auf die gleiche Drehgeschwindigkeit wie diese beschleunigt wird, dann gegen die alte Bahn gedrückt wird, wobei die offenliegende Selbstklebemasse des Klebebandes mit der alten Bahn bei im wesentlichen gleichen Geschwindigkeiten der Bahnen verklebt, während zugleich der Spaltträger aus spaltfähigem Material spaltet und beide Selbstklebemassen, die auf ihm beschichtet waren, mit seinen Resten nichtklebend abdeckt. Im Verlauf des weiteren Prozesses durchläuft die Klebestelle zusammen mit den derart verklebten Bahnen nach erfolgtem Splice einen Kalander.

Nach dem Kontakt des Klebebandes mit der ablaufenden Bahn kommt es also zum Spalten des spaltbaren Systems des Klebebandes, so daß die oberste Papierlage des neuen Ballens freigegeben wird und keine klebrigen Rückstände mehr offen vorliegen. Um den hohen Temperaturen und/oder Drücken zu widerstehen, wird bevorzugt ein erfinderisches Klebeband eingesetzt, also ein solches, welches eine besonders scherfeste Klebemasse zum Verbinden der Papierbahnen besitzt.

Vorteilhaft kann das Spliceverfahren derart durchgeführt werden, daß das Klebeband in einer geraden Linie rechtwinklig oder mit einem spitzen Winkel bis zu 15° quer zur laufenden Bahn verklebt wird.

Im folgenden soll die Erfindung anhand eines Ausführungsbeispiels näher beschrieben werden, ohne sie damit aber unnötig einschränken zu wollen. Es zeigen:
- Fig. 1: eine seitliche, schematische Ansicht eines erfindungsgemäßen Klebebandes
- Fig. 2: eine seitliche, schematische Ansicht eines Klebebandes gemäß Fig. 1, aufgeklebt auf eine Papierrolle und fertig für den fliegenden Rollenwechsel
- Fig. 3: eine Ansicht gemäß Fig. 2, aber nach erfolgtem fliegenden Rollenwechsel

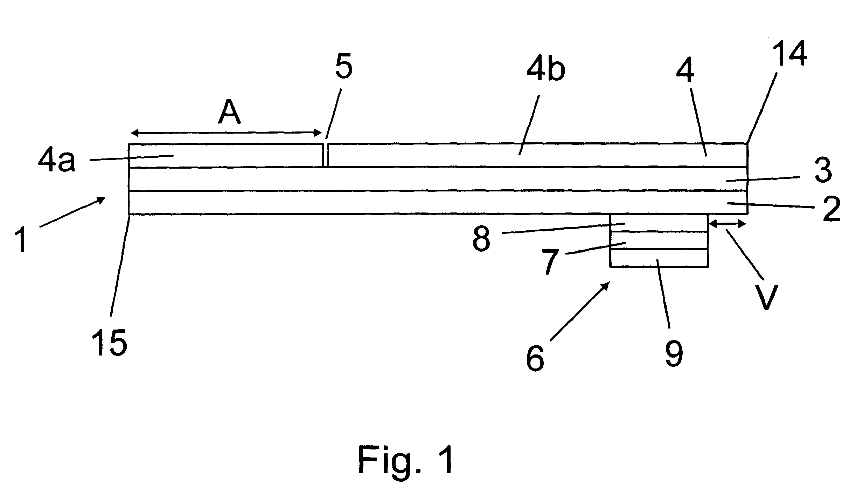

Im einzelnen zeigt Fig. 1 ein Klebeband 1 mit einem Hauptträger 2 aus schwach gekrepptem Papier, einseitig beschichtet mit einer wasserlöslichen Selbstklebemasse 3. Die Gesamtdicke des Hauptträgers 2 mit Selbstklebemasse 3 beträgt 0,088 mm, die Breite 150 mm, im Handel als tesakrepp 51447 von Beiersdorf AG, Deutschland.
Abgedeckt ist die Selbstklebemasse 3 mit einem silikonisierten Trennpapier 4, das in 30 mm Abstand vom linken Rand mit einem Schlitz 5 versehen ist, so daß zunächst der linke Teil 4a des Trennpapiers 4 abgenommen werden kann, dann der rechte Teil 4b.
Im Bereich des rechten Endes des Klebebandes 1 ist ein Streifen eines doppelseitig klebenden Klebebandes 6 unterklebt, bestehend aus einem Papierträger 7 aus Spaltpapier, beidseits beschichtet mit wasserlöslicher Selbstklebemasse 8 bzw. 9. Das Klebeband hat eine Breite von 9 mm.

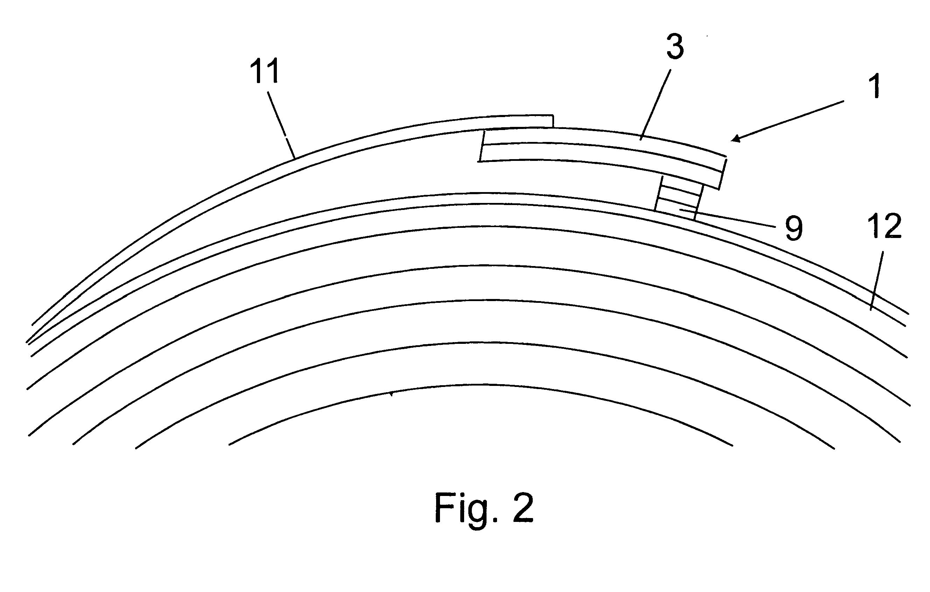

In Fig. 2 ist dargestellt, wie ein solches Klebeband 1 unter eine Papierbahn 11 einer neuen Papierrolle geklebt ist, und zwar mit dem linken Teil, nachdem von diesem der Teil 4a des Trennpapiers 4 abgezogen wurde. Vorher wurde das Klebeband mit den freiliegenden Selbstklebemasse 9 auf die unter der Papierbahn 11 liegende Papierbahn 12 der Papierrolle verklebt. Auch der rechte Teil 4b des Trennpapiers 4 wurde abgezogen, so daß die so ausgerüstete Papierrolle fertig für einen fliegenden Rollenwechsel ist, wobei die Verklebung des Klebebandes 1 im rechten Winkel über die Rolle läuft.
Die Selbstklebemasse 3 liegt nun offen und stellt für den fliegenden Wechsel die Kontaktfläche zu ablaufenden Bahnen dar. Die Kontaktfläche hat eine Breite von 120 mm und erstreckt sich über die gesamte Breite der Papierrolle.

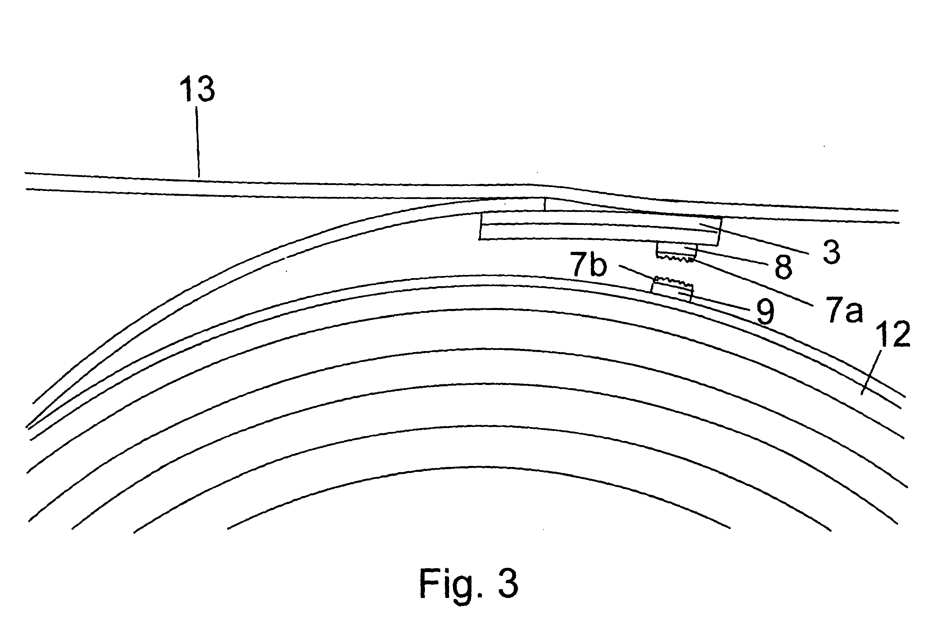

Die so ausgerüstete (neue) Papierrolle wird neben die abgewickelte (alte) Papierrolle gebracht, an die die neue angesetzt werden soll. Die neue Papierrolle wird auf eine Drehgeschwindigkeit beschleunigt, die der Geschwindigkeit der ablaufenden Bahn nahezu entspricht. Sind beide Geschwindigkeiten ausreichend synchronisiert, kann der Wechsel vollzogen werden: Die ablaufende Bahn 13 wird mittels Andruckwelle (nicht dargestellt) mit dem Umfang der neuen Rolle in Kontakt gebracht und die Selbstklebemasse 3 gemäß Fig. 3 mit der ablaufenden Papierbahn 13 verklebt. Augenblicklich nach dem Klebekontakt spalten die spaltfähigen Papierträger 7 derart, daß ein Teil 7a auf dem Klebeband 1 verbleibt und dort die Selbstklebemasse 8 abdeckt, während der andere Teil 7b auf der Selbstklebemasse 9 verbleibt, welche auf der Papierbahn 12 klebt. Damit sind beide Selbstklebemasse 8 und 9 gewissermaßen neutralisiert, kleben nicht mehr und stören damit auch nicht im weiteren Prozeß in den Papierverarbeitungsmaschinen.

Das erfinderische Klebeband ist überraschend gut geeignet für den fliegenden Rollenwechsel in Verarbeitungsabläufen, bei denen der Splice einen Kalander durchläuft. Die bisher zum Stand der Technik gehörigen Splice-Klebebänder sind hierzu wegen der Weichheit (geringen Scherfestigkeit) der eingesetzten Haftklebemassen nicht geeignet. Wider Erwarten zeigen die bisher nur für den manuellen, statischen Spliceprozeß verwendbaren Klebemassen für das erfinderische Klebeband bei Verwendung für den fliegenden Spliceprozeß trotz ihrer Scherfestigkeit und der damit verbundenen Härte auch bei hohen Scher-, Druck- und Temperaturbeanspruchungen einen hinreichend guten Tack, um den Splice zu ermöglichen. Selbst bei hohen Geschwindigkeiten, wie sie im fliegenden Wechsel auftreten, ist die Splicesicherheit gegeben: So konnte durch Versuche nachgewiesen werden, daß noch bei Geschwindigkeiten bis zu 1200 m/min der Spliceprozeß erfolgreich verläuft.
Dieser Wert übersteigt deutlich die Erwartungen, welche heutzutage an Systeme gestellt werden müssen, bei denen das Flachbahnmaterial, insbesondere Papierbahnen, Kalander durchlaufen. Hier sind bei dem Momentanen Stand der Technik Geschwindigkeiten bis zu 300 m/min realisierbar.
Der Masseauftrag der Selbstklebemasse kann sehr gering gehalten werden, für den Fachmann unerwartet ist selbst bei Masseaufträgen beispielsweise im Bereich zwischen 30 und 60 g/m², besonders bei 40 g/m² (im Rahmen der üblichen Fehlertoleranzen), die Anfaßklebrigkeit der Selbstklebemasse gut und das Klebeband für den Einsatz für den fliegenden Rollenwechsel geeignet. Durch die geringen Masseaufträge ist auch die Dicke des Klebebandes gering, so daß das Klebeband der Druckbeanspruchung beim Durchlaufen hervorragend widersteht.

## Patentansprüche

1. Verwendung einer Selbstklebemasse, die
zu 25 bis 45 Gew.-% aus einem Polymer aus 40 bis 90 Gew.-% Acrylsäure und 60 bis 10 Gew.-% Butylacrylat
und zu 55 bis 75 Gew.-% aus ethoxylierten Alkylaminen
besteht
und eine Scherfestigkeit von mindestens 1000 Minuten auf Streichrohpapier und mindestens 2000 Minuten auf Tiefdruckpapier aufweist, gemessen jeweils bei 23 °C und 55 % rel. Luftfeuchte und bei 1 kg Belastung,
für ein Klebeband für den fliegenden Rollenwechsel von auf Rollen aufgewickelten Flachbahnmaterial in Prozessen, bei denen das Flachbandmaterial einen oder mehrere Kalander durchläuft.

2. Klebeband für den fliegenden Rollenwechsel von auf Rollen aufgewickeltem Flachbahnmaterial in Prozessen, bei denen das Flachbandmaterial einen oder mehrere Kalander durchläuft, ausgerüstet mit einem Hauptträger (2), einer Selbstklebemasse (3) auf der Vorderseite und zumindest einem klebenden spaltbaren System (6) auf der Rückseite,
**dadurch gekennzeichnet, dass**
die Selbstklebemasse
zu 25 bis 45 Gew.-% aus einem Polymer aus 40 bis 90 Gew.-% Acrylsäure und 60 bis 10 Gew.-% Butylacrylat
und zu 55 bis 75 Gew.-% aus ethoxylierten Alkylaminen
besteht
und eine Scherfestigkeit von mindestens 1000 Minuten auf Streichrohpapier und mindestens 2000 Minuten auf Tiefdruckpapier aufweist, gemessen jeweils bei 23 °C und 55 % rel. Luftfeuchte und bei 1 kg Belastung.

3. Verwendung einer Selbstklebemasse, die
zu 25 bis 45 Gew.-% aus einem Polymer aus 40 bis 90 Gew.-% Acrylsäure, 30 bis 5 Gew.-% Butylacrylat und 30 bis 5 Gew.-% Ethylhexylacrylat
und zu 55 bis 75 Gew.-% aus ethoxylierten Alkylaminen
besteht
und eine Scherfestigkeit von mindestens 1000 Minuten auf Streichrohpapier und mindestens 2000 Minuten auf Tiefdruckpapier aufweist, gemessen jeweils bei 23 °C und 55 % rel. Luftfeuchte und bei 1 kg Belastung,
für ein Klebeband für den fliegenden Rollenwechsel von auf Rollen aufgewickelten Flachbahnmaterial in Prozessen, bei denen das Flachbandmaterial einen oder mehrere Kalander durchläuft.

4. Klebeband für den fliegenden Rollenwechsel von auf Rollen aufgewickeltem Flachbahnmaterial in Prozessen, bei denen das Flachbandmaterial einen oder mehrere Kalander durchläuft, ausgerüstet mit einem Hauptträger (2), einer Selbstklebemasse (3) auf der Vorderseite und zumindest einem klebenden spaltbaren System (6) auf der Rückseite,
**dadurch gekennzeichnet, dass**
die Selbstklebemasse
zu 25 bis 45 Gew.-% aus einem Polymer aus 40 bis 90 Gew.-% Acrylsäure, 30 bis 5 Gew.-% Butylacrylat und 30 bis 5 Gew.-% Ethylhexylacrylat
und zu 55 bis 75 Gew.-% aus ethoxylierten Alkylaminen
besteht
und eine Scherfestigkeit von mindestens 1000 Minuten auf Streichrohpapier und mindestens 2000 Minuten auf Tiefdruckpapier aufweist, gemessen jeweils bei 23 °C und 55 % rel. Luftfeuchte und bei 1 kg Belastung.

5. Klebeband nach zumindest einem der Ansprüche 2 oder 4, **dadurch gekennzeichnet, daß**
der Masseauftrag der Selbstklebemasse (3) 30 bis 60 g/m², insbesondere 35 - 50 g/m² beträgt.

6. Klebeband nach zumindest einem der Ansprüche 2, 4 oder 5, **dadurch gekennzeichnet, daß**
die Selbstklebemasse (3) eine solche auf Acrylatbasis ist.

7. Klebeband nach zumindest einem der Ansprüche 2 oder 4 bis 6, **dadurch gekennzeichnet, daß**
das oder die spaltbaren Systeme (6) auf geleimtem hochverdichtetem Papier, auf einem Verbund aus Papier und Folie oder auf einem Verbund aus zwei Folien basieren.

8. Klebeband nach zumindest einem der Ansprüche 2 oder 4 bis 7, **dadurch gekennzeichnet, daß**
das oder die spaltbaren Systeme (3) die gleiche Breite wie der Hauptträger (2) haben.

9. Klebeband nach zumindest einem der Ansprüche 2 oder 4 bis 8, **dadurch gekennzeichnet, daß**
der Hauptträger (2) ein reißfester Papier- oder Folienträger ist.

10. Klebeband nach zumindest einem der Ansprüche 2 oder 4 bis 9, **dadurch gekennzeichnet, daß**
die Selbstklebemasse (3) mit einer Abdeckung (4) versehen ist, die gegebenenfalls mit einer Perforation oder einem Schlitz (5) in Längsrichtung versehen ist.

11. Klebeband nach zumindest einem der Ansprüche 2 oder 4 bis 10, **dadurch gekennzeichnet, daß**
die Spaltfestigkeit des Spaltsystems (6) 5 bis 70 cN/cm, insbeosndere 12 bis 60 cN/cm beträgt.

12. Spliceverfahren,
bei dem der obersten Bahn (11) einer Rolle eines Flachbahnmaterials ein Klebeband (1) nach einem der Ansprüche 2 oder 4 bis 11 teilweise hinterklebt wird, während die Unterseite des Klebebandes mit der darunter liegenden Bahn (12) verklebt und damit die oberste Bahn sichert,
wobei gegebenenfalls zunächst nur ein Teil (4a) der gegebenenfalls auf der Selbstklebemasse (3) befindlichen Abdeckung (4) abgezogen wurde, so daß der zum Spliceverfahren benötigte Teil der Selbstklebemasse (3) noch mit Abdeckung (4b) abgedeckt ist und die Rolle in diesem Zustand keine freie klebende Fläche aufweist, worauf zur abschließenden Vorbereitung des Spliceverfahrens die gegebenenfalls noch vorhandene restliche Abdeckung (4b) entfernt wird, worauf die so ausgerüstete neue Rolle neben eine fast gänzlich abgespulte, zu ersetzende alte Rolle plaziert wird und auf die gleiche Drehgeschwindigkeit wie diese beschleunigt wird, dann gegen die alte Bahn (13) gedrückt wird, wobei die offenliegende Selbstklebemasse (3) des Klebebandes (1) mit der alten Bahn (13) bei im wesentlichen gleichen Geschwindigkeiten der Bahnen verklebt, während zugleich der Spaltträger (7) aus spaltfähigem Material spaltet und beide Selbstklebemassen (8, 9), die auf ihm beschichtet waren, mit seinen Resten (7a, 7b) nichtklebend abdeckt,
und in welchem die Klebestelle zusammen mit den derart verklebten Bahnen nach erfolgtem Splice zumindest einen Kalander durchläuft.

## Revendications

1. Utilisation d'une pâte autoadhésive constituée de :
entre 25 et 45 % en poids d'un polymère composé de 40 à 90 % en poids d'acide acrylique et de 60 à 10 % en poids d'acrylate de butyle et de
entre 55 et 75 % en poids d'alkylamines éthoxylées
et qui présente une résistance au cisaillement d'au moins 1 000 minutes sur un support de couche et d'au moins 2 000 minutes sur du papier d'héliogravure, mesurée chaque fois à 23°C, à 55 % d'humidité relative de l'air et sous une sollicitation de 1 kg,
pour un ruban adhésif pour le changement automatique de rouleaux d'un matériau en nappe plate enroulé en rouleaux dans des processus dans lesquels le matériau en nappe plate traverse une ou plusieurs calandres.

2. Ruban adhésif pour le changement automatique de rouleaux de matériau en nappe plate enroulé en rouleaux dans des processus dans lesquels le matériau en nappe plate traverse une ou plusieurs calandres, dont le côté avant présente un support principal (2) et une pâte autoadhésive (3) et dont le dos présente au moins un système adhésif (6) refendable,
**caractérisé en ce que**
la pâte autoadhésive est constituée de :
entre 25 et 45 % en poids d'un polymère composé de 40 à 90 % en poids d'acide acrylique et de 60 à 10 % en poids d'acrylate de butyle et de
entre 75 et 55 % en poids d'alkylamines éthoxylées
et présente une résistance au cisaillement d'au moins 1 000 minutes sur un support de couche et d'au moins 2 000 minutes sur du papier d'héliogravure, mesurée chaque fois à 23°C, à 55 % d'humidité relative de l'air et sous une sollicitation de 1 kg, pour un ruban adhésif pour le changement automatique de rouleaux d'un matériau en nappe plate enroulé en rouleaux dans des processus dans lesquels le matériau en nappe plate traverse une ou plusieurs calandres."

3. Utilisation d'une pâte autoadhésive qui est constituée d'entre 25 et 45 % en poids d'un polymère composé d'entre 40 et 90 % en poids d'acide acrylique, d'entre 30 et 5 % en poids d'acrylate de butyle et d'entre 30 et 5 % d'acrylate d'éthylhexyle et d'entre 55 et 75 % en poids d'alkylamines éthoxylées et qui présente une résistance au cisaillement d'au moins 1 000 minutes sur un support de couche et d'au moins 2 000 minutes sur du papier d'héliogravure, mesurée chaque fois à 23°C, à 55 % d'humidité relative de l'air et sous une sollicitation de 1 kg.

4. Ruban adhésif pour le changement automatique de rouleaux de matériau en nappe plate enroulé en rouleau dans des processus dans lesquels le matériau en nappe plate traverse une ou plusieurs calandres, dont le côté avant présente un support principal (2) et une pâte autoadhésive (3) et dont le dos présente au moins un système adhésif (6) refendable,
**caractérisé en ce que**
la pâte autoadhésive est composée de :
entre 25 et 45 % en poids d'un polymère constitué de 40 à 90 % en poids d'acide acrylique, de 30 à 5 % en poids d'acrylate de butyle et de 30 à 5 % d'acrylate d'éthylhexyle et
de 55 à 75 % en poids d'alkylamines éthoxylées et
présente une résistance au cisaillement d'au moins 1 000 minutes sur un support de couche et d'au moins 2 000 minutes sur du papier d'héliogravure, mesurée chaque fois à 23°C, à 55 % d'humidité relative de l'air et sous une sollicitation de 1 kg.

5. Ruban adhésif selon l'une au moins des revendications 2 ou 4, **caractérisé en ce que** l'apport massique de pâte autoadhésive (3) est compris entre 30 et 60 g/m² et en particulier entre 35 et 50 g/m².

6. Ruban adhésif selon au moins l'une des revendications 2, 4 ou 5, **caractérisé en ce que** la pâte autoadhésive (3) est préparée à base d'acrylate.

7. Ruban adhésif selon au moins l'une des revendications 2 ou 4 à 6, **caractérisé en ce que** le ou les systèmes refendables (6) ont pour base du papier fortement compressé et collé, un composite de papier et de film ou un composite de deux films.

8. Ruban adhésif selon au moins l'une des revendications 2 ou 4 à 7, **caractérisé en ce que** le ou les systèmes refendables (3) ont la même largeur que le support principal (2).

9. Ruban adhésif selon au moins l'une des revendications 2 ou 4 à 8, **caractérisé en ce que** le support principal (2) est un support en papier ou en film qui résiste à la déchirure.

10. Ruban adhésif selon au moins l'une des revendications 2 ou 4 à 9, **caractérisé en ce que** la pâte autoadhésive (3) est munie d'un recouvrement (4) éventuellement doté d'une perforation ou d'une entaille (5) dans la direction longitudinale.

11. Ruban adhésif selon au moins l'une des revendications 2 ou 4 à 10, **caractérisé en ce que** la force nécessaire pour séparer le système refendable (6) est comprise entre 5 et 70 cN/cm et en particulier entre 12 et 60 cN/cm.

12. Procédé d'épissage
dans lequel on colle partiellement un ruban adhésif (1) selon l'une des revendications 2 ou 4 à 11 sur le dos de l'enroulement supérieur (11) d'un rouleau de matériau en nappe plate, tandis que le côté inférieur du ruban adhésif adhère à l'enroulement (12) qui se trouve en dessous et fixe ainsi l'enroulement supérieur,
dans lequel on ne retire éventuellement tout d'abord qu'une partie (4a) du recouvrement (4) qui se trouve éventuellement sur la pâte autoadhésive (3), de telle sorte que la partie de la pâte autoadhésive (3) nécessaire au procédé d'épissage est encore munie du recouvrement (4b) et que le rouleau ne présente dans cette situation aucune surface collante libre, après quoi, pour finir la préparation du procédé d'épissage, on retire le recouvrement (4b) résiduel éventuellement encore présent, puis on place le nouveau rouleau ainsi muni à côté d'un ancien rouleau qui est presque complètement épuisé et qu'il faut remplacer et on lui donne une vitesse de rotation égale à celle de l'ancien rouleau, on le presse contre l'ancienne nappe (13), la pâte autoadhésive exposée (3) du ruban adhésif (1) adhère à l'ancienne nappe (13), les nappes tournant essentiellement à la même vitesse, tandis que, simultanément, le support refendable (7) en matériau refendable se sépare et par ses résidus (7a, 7b), recouvre de manière non adhésive les deux pâtes autoadhésives (8, 9) qui étaient appliquées sur lui et
dans lequel, une fois l'épissage terminé, l'emplacement de collage traverse au moins une calandre avec les nappes ainsi collées.

## Claims

1. Use of a self-adhesive composition which consists of 25 to 45% by weight of a polymer of 40 to 90% by weight of acrylic acid and 60 to 10% by weight of butyl acrylate and of 55 to 75% by weight of ethoxylated alkyl amines and having a shear strength of at least 1000 minutes on coating base paper and at least 2000 minutes on gravure paper, measured in each case at 23°C and 55% relative humidity under a load of 1 kg, for an adhesive tape for the flying splice of flat web material wound into rolls in operations where the flat tape material passes through one or more calenders.

2. Adhesive tape for the flying splice of flat web material wound into rolls in operations where the flat tape material passes through one or more calenders, equipped with a main backing (2), a self-adhesive composition (3) on the front face, and at least one adhesive cleavable system (6) on the reverse face,
**characterized in that** the self-adhesive composition consists of 25 to 45% by weight of a polymer of 40 to 90% by weight of acrylic acid and 60 to 10% by weight of butyl acrylate and of 55 to 75% by weight of ethoxylated alkyl amines and has a shear strength of at least 1000 minutes on coating base paper and at least 2000 minutes on gravure paper, measured in each case at 23°C and 55% relative humidity under a load of 1 kg.

3. Use of a self-adhesive composition which consists of 25 to 45% by weight of a polymer of 40 to 90% by weight of acrylic acid, 30 to 5% by weight of butyl acrylate and 30 to 5% by weight of ethylhexyl acrylate and of 55 to 75% by weight of ethoxylated alkyl amines and having a shear strength of at least 1000 minutes on coating base paper and at least 2000 minutes on gravure paper, measured in each case at 23°C and 55% relative humidity under a load of 1 kg, for an adhesive tape for the flying splice of flat web material wound into rolls in operations where the flat tape material passes through one or more calenders.

4. Adhesive tape for the flying splice of flat web material wound into rolls in operations where the flat tape material passes through one or more calenders, equipped with a main backing (2), a self-adhesive composition (3) on the front face, and at least one adhesive cleavable system (6) on the reverse face,
**characterized in that** the self-adhesive composition consists of 25 to 45% by weight of a polymer of 40 to 90% by weight of acrylic acid, 30 to 5% by weight of butyl acrylate and 30 to 5% by weight of ethylhexyl acrylate and of 55 to 75% by weight of ethoxylated alkyl amines and has a shear strength of at least 1000 minutes on coating base paper and at least 2000 minutes on gravure paper, measured in each case at 23°C and 55% relative humidity under a load of 1 kg.

5. Adhesive tape according to at least one of Claims 2 or 4, **characterized in that** the application rate of the self-adhesive composition (3) is from 30 to 60 g/m², in particular 35-50 g/m².

6. Adhesive tape according to at least one of Claims 2, 4 or 5, **characterized in that** the self-adhesive composition (3) is an acrylate-based composition.

7. Adhesive tape according to at least one of Claims 2 or 4 to 6,
**characterized in that** the cleavable system or systems (6) is or are based on sized, highly compacted paper, on a paper/film composite or on a two-film composite.

8. Adhesive tape according to at least one of Claims 2 or 4 to 7,
**characterized in that** the cleavable system or systems (3) has or have the same width as the main backing (2).

9. Adhesive tape according to at least one of Claims 2 or 4 to 8,
**characterized in that** the main backing (2) is a high-tensile-strength paper or film backing.

10. Adhesive tape according to at least one of Claims 2 or 4 to 9,
**characterized in that** the self-adhesive composition (3) is provided with a liner (4) which where appropriate is provided with a perforation or a slit (5) in the lengthwise direction.

11. Adhesive tape according to at least one of Claims 2 or 4 to 10,
**characterized in that** the cleavage resistance of the cleavable system (6) is from 5 to 70 cN/cm, in particular from 12 to 60 cN/cm.

12. Splicing process
wherein the topmost web (11) of a roll of a flat web material has an adhesive tape (1) according to any one of Claims 2 or 4 to 11 adhered partly behind it, while the underside of the adhesive tape adheres to the underlying web (12) and hence secures the topmost web;
where appropriate, initially only part (4a) of any liner (4) that may be present on the self-adhesive composition (3) has been removed, so that the part of the self-adhesive composition (3) that is required for the splicing process is still lined with liner (4b) and the roll in this state does not have a free adhesive surface; thereafter, in final preparation for the splicing process, any remaining liner (4b) still present is removed, after which the new roll equipped in this way is placed alongside an old roll which is almost fully unwound and requires replacement, and is accelerated to the same rotational speed as the old roll, then pressed against the old web (13); the exposed self-adhesive composition (3) of the adhesive tape (1) adheres to the old web (13) with the webs at substantially the same speed, while at the same time the cleavable backing (7) made of cleavable material cleaves and with its residues (7a, 7b) nonadhesively covers the two self-adhesive compositions (8, 9) which were coated on it,
and wherein the bond site, together with the webs thus bonded, after splicing has taken place, passes through at least one calender.
